# EUROPÄISCHE PATENTSCHRIFT

(11) **EP 2 212 724 B1**
(45) Veröffentlichungstag und Bekanntmachung des Hinweises auf die Patenterteilung: **19.10.2011**
(21) Anmeldenummer: 08852312.1
(22) Anmeldetag: 19.11.2008
(51) Int. Cl.: G02B 3/00, G02B 5/02, G03B 13/24, G03B 21/62

(54) **OPTISCHES BAUELEMENT UND BELEUCHTUNGSVORRICHTUNG**
OPTICAL COMPONENT AND LIGHTING APPARATUS
COMPOSANT OPTIQUE ET DISPOSITIF D'ÉCLAIRAGE

(30) Priorität: 23.11.2007 DE 102007056402
(43) Veröffentlichungstag der Anmeldung: 04.08.2010
(60) Teilanmeldung: 10170795.8
(73) Patentinhaber: OSRAM Opto Semiconductors GmbH, 93055 Regensburg (DE); Osram Gesellschaft mit beschränkter Haftung, 81543 München (DE)
(72) Erfinder: BRICK, Peter, 93051 Regensburg (DE); MUSCHAWECK, Julius, 82131 Gauting (DE); SCHWALENBERG, Simon, Dr., 93093 Donaustauf (DE)
(74) Vertreter: Epping - Hermann - Fischer
(86) Internationale Anmeldenummer: PCT/DE2008/001909
(87) Internationale Veröffentlichungsnummer: WO 2009/065389

(56) Entgegenhaltungen:
- WO-A-00/79341
- WO-A-02/10804
- GB-A- 2 415 771
- US-A- 4 912 613
- US-A1- 2004 008 411

## Beschreibung

Diese Patentanmeldung beansprucht die Priorität der deutschen Patentanmeldung 10 2007 056 402.5, deren Offenbarungsgehalt hiermit durch Rückbezug aufgenommen wird.

Es werden ein optisches Bauelement und eine Beleuchtungsvorrichtung mit einem optischen Bauelement nach den Oberbegriffen der unabhängigen Ansprüche angegeben.

Zu Beleuchtungszwecken werden oftmals Lichtquellen eingesetzt, die einen inhomogenen Leuchteindruck in Form einer inhomogenen Leuchtdichteverteilung oder einer inhomogenen Farbverteilung bei einem Betrachter erwecken. Um eine inhomogene Leuchtdichteverteilung oder Farbverteilung zu homogenisieren, werden der Lichtquelle nachgeordnete Komponenten eingesetzt, die das Licht der Lichtquelle mittels Oberflächen- oder Volumenstreuung vollständig oder teilweise diffus streuen. Jedoch sind mit der diffusen Streuung Verluste in der abgestrahlten Leistung und eine verschlechterung der Etendue, also dem Produkt aus der Abstrahlfläche und dem Raumwinkel, in den das Licht abgestrahlt wird, verbunden.

Die Druckschrift WO 00/79341 A1 offenbart ein optisches Bauelement umfassend eine Trägerplatte und ein Linsenarray, das sich aus einer Mehrzahl von mehreckigen Linsen zusammensetzt .

Die Druckschrift GB 2 415 771 A offenbart eine Lichtquelle mit einer Linse, die eine Vielzahl von Linsenelementen ufweist.

Zumindest eine Aufgabe von bestimmten Ausführungsformen ist es daher, ein optisches Bauelement, das die oben genannten Nachteile verringern oder vermeiden kann, und eine Beleuchtungsvorrichtung mit einem optischen Bauelement anzugeben.

Diese Aufgabe wird durch Gegenstände mit den Merkmalen der unabhängigen Patentansprüche gelöst. Vorteilhafte Ausführungsformen und Weiterbildungen des Gegenstands sind in den abhängigen Ansprüchen gekennzeichnet und gehen weiterhin aus der nachfolgenden Beschreibung und den Zeichnungen hervor.

Ein optisches Bauelement gemäß einer Ausführungsform umfasst insbesondere
- eine Trägerplatte mit einer ersten Hauptoberfläche und einer der erste Hauptoberfläche abgewandten zweiten Hauptoberfläche und
- einer ersten Linsenstruktur auf der ersten Hauptoberfläche, wobei
- die erste Linsenstruktur zumindest ein erstes Linsenelement mit einer ersten mehreckigen Form und ein zweites Linsenelement mit einer zweiten mehreckigen Form aufweist,
- die erste Linsenstruktur die erste Hauptoberfläche vollständig bedeckt und
- das erste Linsenelement und das zweite Linsenelement nicht deckungsgleich zueinander sind und/oder sich in ihrer Orientierung auf der ersten Hauptoberfläche der Trägerplatte unterscheiden.

Dass das erste und das zweite Linsenelement eine mehreckige Form aufweisen, kann hier und im Folgenden bedeuten, dass das erste Linsenelement und das zweite Linsenelement jeweils eine gekrümmte Fläche aufweisen können, die durch eine Begrenzungslinie begrenzt ist, die die erste bzw. zweite mehreckige Form aufweist.

Insbesondere kann "mehreckig" hier und im Folgenden hinsichtlich der ersten mehreckigen Form und der zweiten mehreckigen Form bedeuten, dass die erste Form und/oder die zweite Form beispielsweise ein regelmäßiges oder unregelmäßiges n-Eck ist, wobei n größer oder gleich 3 ist. Die Verbindungslinien zwischen den n Ecken können dabei gerade oder gekrümmt sein. Das n-Eck kann dabei plan sein und damit also in einer Ebene liegen. Alternativ kann die mehreckige Form auf einer gekrümmten Oberfläche angeordnet sein. Das kann bedeuten, dass die mehreckige Form durch eine zumindest teilweise gekrümmte Begrenzungslinie gebildet wird, die nicht in einer Ebene liegt.

Das hier beschriebene optische Bauelement kann insbesondere geeignet sein, eine Lichtquelle auf eine zu beleuchtende Fläche wie etwa einen Schirm abzubilden und dabei einen inhomogenen Leuchteindruck der Lichtquelle zu homogenisieren und eine runde Lichtverteilung auf der zu beleuchtenden Fläche zu erzeugen. Zur Erzeugung einer runden beleuchteten flächen wurden bisher runde Mikrolinsen verwendet, die jedoch nicht flächendeckend angeordnet werden können. Daher kommt es bei diesen zu nicht von den Mikrolinsen bedeckten Bereichen und durch diese zu so genannten Neben- oder Geisterbildern. Um solche Geisterbilder zu vermeiden müssen die nicht von den runden Mikrolinsen bedeckten Bereiche Licht absorbierend sein, also ausgeschwärzt werden, was wiederum zu einer Verringerung der abgestrahlten Leistung führt. Dieser Nachteil kann durch das hier beschriebene optische Bauelement vermieden werden, denn insbesondere durch die mehreckige Form der Linsenelemente kann beispielsweise im Gegensatz zu runden Mikrolinsen eine vollständige Bedeckung der ersten Hauptoberfläche der Trägerplatte durch die erste Linsenstruktur möglich sein, wobei dann immer zwei benachbarte Linsenelemente, also beispielsweise das erste und das zweite Linsenelement, eine teilweise gemeinsame Begrenzungslinie aufweisen. Beispielsweise können die erste mehreckige Form und die zweite mehreckige Form jeweils ein unregelmäßiges Sechseck sein, die eine teilweise gemeinsame Begrenzungslinie aufweisen können.

Hier und im Folgenden kann "nicht deckungsgleich" für das erste Linsenelement und das zweite Linsenelement bedeuten, dass die erste mehreckige Form und die zweite mehreckige Form derart ausgebildet sind, dass beispielsweise das erste Linsenelement durch keine Drehung und Translation derart ausgerichtet werden kann, dass die erste und zweite mehreckige Form zur Deckung gebracht werden können. Die Drehung kann dabei insbesondere durch eine Drehachse relativ zu einer Haupterstreckungsebene der ersten Hauptoberfläche definiert sein. So kann die Drehachse die Flächennormale der Haupterstreckungsebene der ersten Hauptoberfläche sein. Die Translation kann parallel zur Haupterstreckungsebene der ersten Hauptoberfläche definiert sein. Die erste mehreckige Form und die zweite mehreckige Form können beispielsweise eine zueinander unterschiedliche Anzahl Ecken, unterschiedliche Verbindungslinien zwischen den Ecken, unterschiedliche Größen oder eine Kombination daraus aufweisen. Weiterhin kann die erste mehreckige Form achsen- oder punktsymmetrisch zur zweiten mehreckigen Form sein, wobei dann die erste und zweite mehreckige Form selbst jeweils keine Achsen- oder Punktsymmetrie aufweisen.

Zusätzlich oder alternativ kann "nicht deckungsgleich" für das erste Linsenelement und das zweite Linsenelement bedeuten, dass das erste und das zweite Linsenelement jeweils eine gekrümmte Fläche aufweisen, die nicht deckungsgleich im obigen Sinne sind. Die gekrümmte Fläche des ersten Linsenelements kann dann also durch keine Drehung und Translation in Deckung mit der gekrümmten Fläche des zweiten Linsenelements gebracht werden.

Dass sich das erste Linsenelement und das zweite Linsenelement in ihrer Orientierung auf der ersten Hauptoberfläche auf der Trägerplatte unterscheiden, kann insbesondere bedeuten, dass das erste Linsenelement relativ zum zweiten Linsenelement um eine Drehachse gedreht und translatiert auf der ersten Hauptoberfläche angeordnet ist. Beispielsweise können das erste Linsenelement und das zweite Linsenelement dabei auch deckungsgleich sein. Die Drehachse kann dabei insbesondere die Flächenormale zur Hauptersteckungsebene der ersten Hauptoberfläche sein.

Wird das optische Bauelement mit dem Licht einer Lichtquelle durchstrahlt, so können das erste und das zweite Linsenelement jeweils ein Abbild der Lichtquelle beispielsweise auf einen Schirm projizieren. Dadurch, dass das erste Linsenelement und das zweite Linsenelement nicht deckungsgleich sind und/oder nicht in ihrer Orientierung auf der ersten Hauptoberfläche der trägerplatte übereinstimmen, können die Abbilder des ersten und zweiten Linsenelements verschieden voneinander sein. Gerade dadurch kann es möglich sein, dass das durch das optische Bauelement erzeugte Abbild einer inhomogen abstrahlenden Lichtquelle einen homogeneren Leuchteindruck erweckt als ihn die Lichtquelle ohne das optische Bauelement erzeugen würde.

Das optische Bauelement kann insbesondere geeignet sein, im Strahlengang einer Lichtquelle angeordnet zu sein, die beispielsweise ein- oder mehrfarbiges Licht abstrahlt. Die Wahl der Lichtquelle ist dabei jedoch nicht beschränkend für das optische Bauelement. "Licht" kann hier und im Folgenden insbesondere elektromagnetische Strahlung mit einer oder mehreren Wellenlängen aus einem ultravioletten bis infraroten Spektralbereich, insbesondere aus einem sichtbaren Spektralbereich, bezeichnen.

Weiterhin kann die erste Hauptoberfläche oder die zweite Hauptoberfläche der Lichtquelle zugewandt sein und damit entsprechend die erste oder zweite Linsenstruktur eine Strahlungseintrittsfläche des optischen Bauelements sein. Die andere der ersten Hauptoberfläche und der zweiten Hauptoberfläche kann von der Lichtquelle abgewandt sein und damit kann die andere der ersten und zweiten Linsenstruktur eine Strahlungsaustrittsfläche des optischen Bauelements sein.

Die Lichtquelle kann beispielsweise eine Anordnung von mehreren lichtemittierenden Elementen aufweisen, die beispielsweise jeweils unterschiedliche Leuchteindrücke bei einem Betrachter erwecken können, so dass die Lichtquelle selbst ohne das optische Bauelement eine inhomogene Leuchtdichteverteilung und/oder eine inhomogene Farbverteilung aufweist. Das optische Bauelement kann geeignet sein, die unterschiedlichen Leuchteindrücke der mehreren lichtemittierenden Elemente derart zu überlagern, dass ein homogener Leuchteindruck bei einem Betrachter geweckt werden kann. Das kann dadurch möglich sein, dass das Licht, das von der Lichtquelle abgestrahlt wird, das heißt insbesondere das Licht, das von jeder der mehreren lichtemittierenden Elemente abgestrahlt wird, mittels der ersten Linsenstruktur abgebildet wird. Insbesondere kann das Licht der Lichtquelle mittels des ersten Linsenelements und mittels des zweiten Linsenelements hinter der ersten Linsenstruktur abgebildet werden, wobei das Abbild des Lichts der Lichtquelle durch das erste Linsenelement und das Abbild des Lichts der Lichtquelle durch das zweite Linsenelement hinter der ersten Linsenstruktur überlagert abgebildet werden können. Dadurch, dass die erste Form und die zweite Form nicht deckungsgleich sind und/oder sich in ihrer Orientierung auf der ersten Hauptoberfläche der Trägerplatte unterscheiden, kann es wie oben beschrieben möglich sein, dass die jeweiligen Abbilder des ersten und zweiten Linsenelements nicht gleich sind und es somit durch eine Überlagerung der Abbilder zu einer Mischung derselben kommen kann. Durch die Mischung der Abbilder kann der inhomogene Leuchteindruck der Lichtquelle vermindert oder vermieden werden. Damit kann beispielsweise eine runde Lichtverteilung auf einem Schirm hinter dem optischen Bauelement erreicht werden, obwohl die einzelnen Linsenelemente jeweils eine mehreckige Form aufweisen. Bei bisher bekannten Linsenarrays mit runden Linsen konnten zwar runde Leuchtdichteverteilungen erreicht werden, jedoch wiesen die Leuchtdichteverteilung wie weiter oben ausgeführt auch Neben- oder Geisterabbildungen auf, die durch Ausschwärzen der von den runden Linsen unbedeckten Bereiche verhindert werden mussten. Im Gegensatz dazu konnten bisher bekannte Linsenarrays mit eckigen, gleichartigen und gleichorientierten Linsen keine runden Leuchtdichteverteilungen ermöglichen, sondern lediglich scharf abgegrenzte Leuchtdichteverteilungen mit Formen, die die Formen der Linsen aufwiesen.

Insbesondere kann der Mischungseffekt der ersten Linsenstruktur dadurch erhöht werden, dass die erste Linsenstruktur eine Vielzahl von Linsenelementen aufweist, wobei jedes der Vielzahl der Linsenelemente eine mehreckige Form aufweist. Die Linsenelemente der Vielzahl der Linsenelemente der ersten Linsenstruktur können dabei zumindest teilweise jeweils paarweise nicht deckungsgleich sein und/oder sich in ihrer Orientierung auf der ersten Hauptoberfläche der Trägerplatte unterscheiden. Insbesondere kann die erste Linsenstruktur derart ausgebildet sein, dass alle Linsenelemente der Vielzahl der Linsenelemente der ersten Linsenstruktur paarweise nicht deckungsgleich sind und/oder sich in ihrer Orientierung auf der ersten Hauptoberfläche der Trägerplatte unterschieden.

Jeweils benachbarte Linsenelemente können dabei eine teilweise gemeinsame Begrenzungslinie der jeweiligen mehreckigen Form aufweisen, so dass die Vielzahl der Linsenelemente der ersten Linsenstruktur, und damit die erste Linsenstruktur selbst, die erste Hauptoberfläche vollständig bedecken kann. Wie oben beschrieben kann jedes der Vielzahl von Linsenelementen ein Abbild einer Lichtquelle beispielsweise auf einem Schirm erzeugen. Dadurch, dass sich die Vielzahl der Linsenelemente voneinander unterscheiden und gerade nicht regelmäßig und gleichartig auf der ersten Hauptoberfläche angeordnet sind, können eine Vielzahl von sich überlagernden verschiedenen Abbildern der Lichtquelle auf dem Schirm erzeugt werden, die eine runde und homogene Leuchtdichteverteilung auf dem Schirm zur Folge haben können.

Weiterhin kann das optische Bauelement auf der zweiten Hauptoberfläche eine zweite Linsenstruktur aufweisen. Merkmale bezüglich der ersten Linsenstruktur, die bis hier und im Folgenden beschrieben sind, können einzeln oder zusammen auch für die zweite Linsenstruktur gelten.

Insbesondere kann die zweite Linsenstruktur spiegelverkehrt zur ersten Linsenstruktur auf der ersten Hauptoberfläche sein. Das kann bedeuten, dass die zweite Linsenstruktur deckungsgleich mit einem Spiegelbild der ersten Linsenstruktur ist. In anderen Worten bedeutet dies, dass die erste Linsenstruktur und die zweite Linsenstruktur symmetrisch zueinander sind mit einer Symmetrieebene parallel zur Haupterstreckungsebene der ersten und/oder zweiten Hauptoberfläche. Demzufolge kann die zweite Linsenstruktur zumindest ein erstes und ein zweites Linsenelement aufweisen, die eine spiegelverkehrte Anordnung zueinander auf der zweiten Hauptoberfläche im Vergleich zum zumindest ersten und zweiten Linsenelement auf der ersten Hauptoberfläche aufweisen.

Insbesondere kann die Trägerplatte mit der ersten Linsenstruktur einstückig ausgebildet sein. Das kann bedeuten, dass die erste Hauptoberfläche durch die Oberfläche der ersten Linsenstruktur und damit durch die Gesamtheit der Flächen der Linsenelemente der ersten Linsenstruktur gebildet wird. Ein Linsenelement kann dabei insbesondere als Teil einer sphärischen oder asphärischen konvexen Linse geformt sein. Mit anderen Worten kann das bedeuten, dass die Trägerplatte mit der ersten Linsenstruktur auf der ersten Hauptoberfläche durch eine Vielzahl von konvexen Linsen gebildet wird, die sich gegenseitig durchdringen.

Linsenelemente, die als Teil einer sphärischen Linse ausgeformt sind, können dabei eine einfache Herstellbarkeit ermöglichen. Linsenelemente, die als Teil einer asphärischen Linse ausgeformt sind, können eine Korrektur der bei einer hohen numerischen Apertur auftretenden sphärischen Abberation ermöglichen.

Das erste und das zweite Linsenelement können jeweils eine Brennweite aufweisen. Insbesondere kann es vorteilhaft sein, wenn das erste und zweite Linsenelement dieselbe Brennweite aufweisen. Weist die erste Linsenstruktur eine Vielzahl von Linsenelementen auf, so kann es vorteilhaft sein, wenn alle Linsenelemente dieselbe Brennweite aufweisen.

Weiterhin kann die Trägerplatte mit der ersten Linsenstruktur oder die Trägerplatte mit der ersten und zweiten Linsenstruktur eine Dicke aufweisen, die kleiner oder gleich der Brennweite der Linsenelemente, insbesondere des ersten und zweiten Linsenelements, ist. Wenn die Dicke der Trägerplatte kleiner als die Brennweite der Linsenelemente ist, kann eine Defokussierung der jeweiligen Abbildungen der Linsenelemente beispielsweise auf einem Schirm erreicht werden. Durch eine solche Defokussierung kann eine Erhöhung der Homogenität der Leuchtdichteverteilung auf dem Schirm erreicht werden.

Die Trägerplatte und/oder die erste Linsenstruktur und/oder die zweite Linsenstruktur können einen optischen Kunststoff oder ein Polymer, beispielsweise Polycarbonat (PC), Polymethylmethacrylat (PMMA), Silikon oder Epoxid, ein Glas oder ein Halbleitermaterial wie etwa GaP oder SiC oder eine Mischung oder Kombination daraus aufweisen. Die Herstellung der Trägerplatte und/oder der ersten Linsenstruktur und/oder der zweiten Linsenstruktur kann durch einen Formprozess wie etwa Spritzgießen, Spritzpressen oder Formpressen eines der genannten Kunststoffe erfolgen. Dazu kann beispielsweise ein geeignetes Formwerkzeug bereitgestellt werden, das eine Negativform der Trägerkörpers mit der ersten und/oder zweiten Linsenstruktur aufweist. Dabei können etwa Negativformen der Linsenelemente in eine Oberfläche des Formwerkzeugs beispielsweise durch Fräsen eingearbeitet sein. Weiterhin können die Trägerplatte und/oder die erste Linsenstruktur und/oder die zweite Linsenstruktur durch Fräsen, Schleifen, Ätzen, etwa durch so genanntes Reflow-Ätzen, oder eine Kombination aus einem der oben beschriebenen bereitgestellten Materialien ausgeformt werden.

Gemäß zumindest einer Ausführungsform umfasst eine Beleuchtungsvorrichtung
- eine Lichtquelle, die im Betrieb Licht in einen begrenzten Raumwinkelbereich abstrahlt, und
- ein optisches Bauelement gemäß einer der oben genannten Ausführungsformen.

Insbesondere kann die Lichtquelle eine Anordnung mit lichtemittierenden Dioden (LEDs) aufweisen, die beispielsweise jeweils rotes, grünes oder blaues Licht abstrahlen können. Aus einer Überlagerung des jeweils von den LEDs abgestrahlten Lichts kann ein weißfarbiger Leuchteindruck erzeugt werden. Beispielsweise umfasst die Lichtquelle vier LEDs, die in Abstrahlrichtung nebeneinander angeordnet sind, wobei jeweils eine LED Strahlung im roten Spektralbereich, zwei LEDs Strahlung im grünen Spektralbereich und eine LED Strahlung im blauen Spektralbereich emittieren ("RGGB-LEDs"). Alternativ können auch andere Kombinationen von farbigen LEDs eingesetzt werden wie etwa eine rot, eine blau und eine grün emittierende LED oder etwa eine blau und eine gelb emittierende LED. Weiterhin kann die Lichtquelle LEDs aufweisen, die mischfarbiges Licht, etwa weißes Licht, abstrahlen können. Da die LEDs beispielsweise nebeneinander in der Lichtquelle angeordnet sein können, wird durch die Lichtquelle alleine ein inhomogener Leuchteindruck in Form eine inhomogenen Leuchtdichteverteilung und/oder einer inhomogenen Farbverteilung bei einem Betrachter erweckt, der gerade bei Beleuchtungsanwendungen unerwünscht sein kann.

Eine LED der Lichtquelle kann beispielsweise eine epitaktisch gewachsene Halbleiterschichtenfolge aufweisen. Dabei kann die Halbleiterschichtenfolge beispielsweise auf der Basis eines anorganischen Materials, etwa von InGaAlN, wie etwa GaN-Dünnfilm-Halbleiterchips, ausgeführt sein. Unter InGaA1N-basierte Halbleiterchips fallen insbesondere solche, bei denen die epitaktisch hergestellte Halbleiterschichtenfolge, die in der Regel eine Schichtenfolge aus unterschiedlichen Einzelschichten aufweist, mindestens eine Einzelschicht enthält, die ein Material aus dem III-V-Verbindungshalbleitermaterialsystem InₓAl_{y}Ga_{1-x-y}N mit 0 ≤ x ≤ 1, 0 ≤ y ≤ 1 und x+y ≤ 1 aufweist. Alternativ oder zusätzlich kann die Halbleiterschichtenfolge auch auf InGaA1P basieren, das heißt, dass die Halbleiterschichtenfolge unterschiedliche Einzelschichten aufweist, wovon mindestens eine Einzelschicht ein Material aus dem III-V-Verbindungshalbleitermaterialsystem InₓAl_{y}Ga_{1-x-y}P mit 0 ≤ x ≤ 1, 0 ≤ y ≤ 1 und x+y ≤ 1 aufweist. Alternativ oder zusätzlich kann die Halbleiterschichtenfolge auch andere III-V-Verbindungshalbleitermaterialsysteme, beispielsweise ein AlGaAs-basiertes Material, oder II-VI-Verbindungshalbleitermaterialsysteme aufweisen.

Die Halbleiterschichtenfolge kann zur Lichterzeugung beispielsweise einen herkömmlichen pn-Übergang, eine Doppelheterostruktur, eine Einfach-Quantentopfstruktur (SQW-Struktur) oder eine Mehrfach-Quantentopfstruktur (MQW-Strukur) aufweisen. Die Halbleiterschichtenfolge kann neben dem aktiven Bereich weitere funktionale Schichten und funktionelle Bereiche umfassen, etwa p- oder n-dotierte Ladungsträgertransportschichten, also Elektronen- oder Löchertransportschichten, p- oder n-dotierte Confinement- oder Cladding-Schichten, Barriereschichten, Planarisierungsschichten, Pufferschichten, Schutzschichten und/oder Elektroden sowie Kombinationen daraus. Solche Strukturen den aktiven Bereich oder die weiteren funktionalen Schichten und Bereiche betreffend sind dem Fachmann insbesondere hinsichtlich Aufbau, Funktion und Struktur bekannt und werden von daher an dieser Stelle nicht näher erläutert.

Die Lichtquelle kann weiterhin einen Kollimator aufweisen, der der Anordnung mit den LEDs nachgeordnet sein kann. Der Kollimator kann geeignet sein, das von den LEDs abgestrahlte Licht in den begrenzten Raumwinkelbereich zu lenken und beispielsweise eine Linse und/oder einen Hohlspiegel, etwa einen Parabolspiegel, umfassen oder sein.

Weitere Vorteile und vorteilhafte Ausführungsformen und Weiterbildungen der Erfindung ergeben sich aus den im Folgenden in Verbindung mit den Figuren 1A bis 6E beschriebenen Ausführungsformen.

Es zeigen:
Figuren 1A bis 1C schematische Darstellungen eines optischen Bauelements gemäß einem Ausführungsbeispiel,
Figuren 2A und 2B schematische Darstellungen eines optischen Bauelements gemäß einem weiteren Ausführungsbeispiel und Figur 3 eine schematische Darstellung einer Beleuchtungsvorrichtung gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, etwa Schichten, Bauteile, Bauelemente und Bereiche, zur besseren Darstellbarkeit und/oder zum besseren Verständnis übertrieben dick oder groß dimensioniert dargestellt sein.

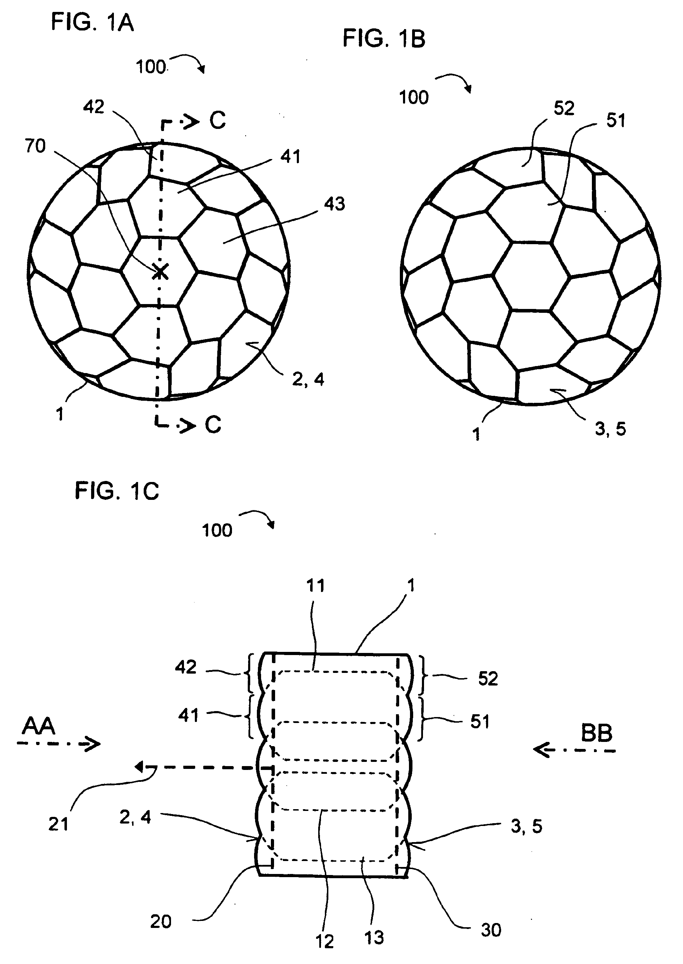

In den Figuren 1A bis 1C ist ein Ausführungsbeispiel für ein optisches Bauelement 100 gezeigt. Dabei zeigt die Darstellung der Figur 1C einen Schnitt durch das optische Bauelement 100 entlang der in Figur 1A gezeigten Schnittebene CC. Figur 1A zeigt eine Vorderansicht des optischen Bauelements aus der in Figur 1C gekennzeichneten Richtung AA, während Figur 1B eine Rückansicht aus der in Figur 1C gekennzeichneten Richtung BB zeigt. Die folgende Beschreibung bezieht sich gleichermaßen auf die Figuren 1A bis 1C.

Das optische Bauelement 100 umfasst eine Trägerplatte 1 aus einem optischen Kunststoff, die eine kreisrunde Form aufweist. Alternativ dazu kann die Trägerplatte 1 auch eine mehreckige oder elliptische Form oder eine Kombination daraus aufweisen. Die Trägerplatte 1 wird zusammen mit der im Folgenden beschriebenen ersten und zweiten Linsenstruktur 4, 5 einstückig mittels eines Formprozesses hergestellt.

Die Trägerplatte 1 weist eine erste Hauptoberfläche 2 mit einer ersten Linsenstruktur 4 und eine zweite, der ersten Hauptoberfläche 2 abgewandte Hauptoberfläche 3 mit einer zweiten Linsenstruktur 5 auf. Die erste Hauptoberfläche 2 wird durch die erste Linsenstruktur 4 gebildet, die die erste Hauptoberfläche 2 vollständig bedeckt, während die zweite Hauptoberfläche durch die zweite Linsenstruktur 5 gebildet wird, so dass die zweite Linsenstruktur 5 die zweite Hauptoberfläche 3 vollständig bedeckt. Die erste Hauptoberfläche 2 weist weiterhin eine Haupterstreckungsrichtung 20 auf, während die zweite Hauptoberfläche 3 eine dazu parallele Haupterstreckungsrichtung 30 aufweist. Durch die Haupterstreckungsrichtungen 20 und 30 ist eine Flächenormale 21 wie in Figur 1C gezeigt definiert.

Die erste Linsenstruktur 4 weist eine Vielzahl von Linsenelementen auf, von denen beispielhaft ein erstes Linsenelement 41, ein zweites Linsenelement 42 und ein weiteres Linsenelement 43 bezeichnet sind. Die Anzahl der gezeigten Linsenelemente ist dabei rein beispielhaft und nicht beschränkend. Alternativ zum gezeigten Ausführungsbeispiel kann die Trägerplatte beispielsweise auch lediglich das erste und das zweite Linsenelement 41, 42 als Linsenstruktur 4 aufweisen.

Das erste und das zweite Linsenelement 41, 42 weisen wie alle weiteren Linsenelemente der ersten Linsenstruktur 4 eine mehreckige Form auf. Insbesondere weist das erste Linsenelement 41 eine erste mehreckige Form auf, während das zweite Linsenelement 42 eine zweite mehreckige Form aufweist. Die erste und die zweite mehreckige Form sind dabei nicht deckungsgleich, da sich beispielsweise die erste mehreckige Form des ersten Linsenelements 41 durch keine Drehung um eine Drehachse parallel zur Flächenormalen 21 und durch keine Translation in die zweite mehreckige Form überführen lässt. Die mehreckige Form aller Linsenelemente, die nicht unmittelbar an den Randbereich der ersten Hauptoberfläche 2 grenzen, ist dabei sechseckig. Dadurch ist eine vollständige und lückenlose Bedeckung der ersten Hauptoberfläche 2 mit der ersten Linsenstruktur 4 möglich.

Im Gegensatz dazu unterscheiden sich beispielsweise das erste Linsenelement 41 und das weitere Linsenelement 43 durch ihre Orientierung auf der ersten Hauptoberfläche 2 der Trägerplatte 1. Das erste Linsenelement 41 und das weitere Linsenelement 43 sind zwar deckungsgleich aber gegeneinander um eine Drehachse parallel zur Flächenormalen 21 verdreht und translatiert auf der Trägerplatte 1 angeordnet.

Weiterhin weisen die Linsenelemente der ersten Linsenstruktur 4 eine Wirbelstruktur auf. Das bedeutet, dass die Linsenelemente mit größer werdendem Abstand zu einem Mittelpunkt 70 der ersten Hauptoberfläche immer mehr um eine Drehachse parallel zur Flächenormalen 21 gedreht sind. Damit ist jedes Linsenelement der Linsenstruktur 4 gegenüber seinen direkten in radialer Richtung benachbarten Linsenelementen verdreht. Neben der nicht-deckungsgleichen Ausformung der Linsenelemente trägt diese Drehung noch weiter zur Zerstörung einer möglichen Symmetrie der Linsenelemente bei.

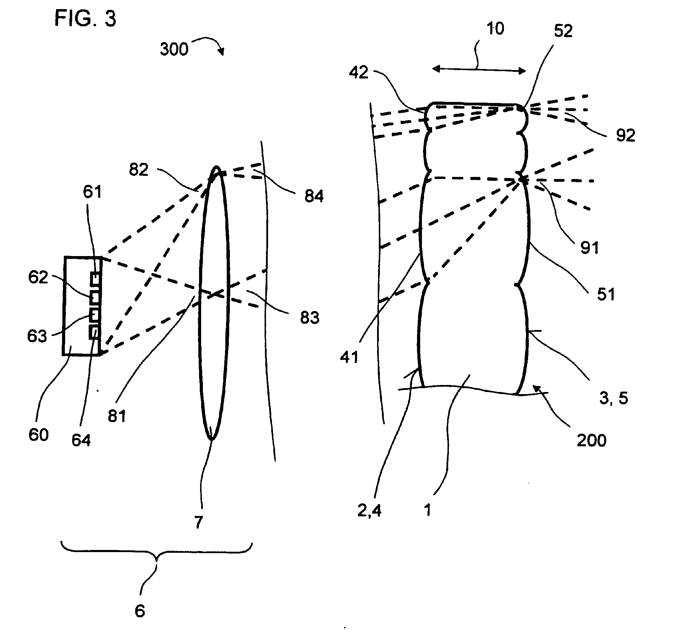

Weiterhin weist jedes der Linsenelemente eine Fläche auf, die es auf der Hauptoberfläche 2 einnimmt und die mit zunehmendem Abstand vom Mittelpunkt 70 kleiner wird. Dadurch ergeben sich Auswirkungen auf die Abstrahlcharakteristik des optischen Bauelements, die in Verbindung mit Figur 3 näher erläutert werden.

Darüber hinaus weist das optische Bauelement 100 eine zweite Linsenstruktur 5 auf der zweiten Hauptoberfläche 3 auf, die spiegelverkehrt zur ersten Linsenstruktur 4 ist. Das bedeutet, dass die zweite Linsenstruktur im Vergleich zur ersten Linsenstruktur jeweils spiegelverkehrt ausgeformte und spiegelverkehrt angeordnete Linsenelemente aufweist, wie rein beispielhaft anhand des ersten Linsenelements 51 und des zweiten Linsenelements 52 der zweiten Linsenstruktur 5 gezeigt ist, die dem ersten bzw. zweiten Linsenelement 41, 42 der ersten Linsenstruktur 4 entsprechen.

Das optische Bauelement 100 ist geeignet, um in Verbindung mit einer Lichtquelle eine homogene Leuchtdichteverteilung mit einer kreisrunden Form im Fernfeld zu erzeugen. Weisen die Linsenelemente beispielsweise alternativ zum gezeigten Ausführungsbeispiel alle parallel zueinander ausgerichtete längliche, mehreckige, nicht-deckungsgleiche Formen auf, so kann auch eine homogene Leuchtdichteverteilung mit einer elliptischen Form im Fernfeld erzeugt werden.

Alternativ zur der in den Figuren 1A bis 1C gezeigten Anordnung der Linsenelement können diese auch alle paarweise voneinander verschieden, das heißt, nicht deckungsgleich sein.

Wie aus Figur 1C ersichtlich ist, weist jedes Linsenelement auf jeder der zwei Hauptoberflächen 2 und 3 des Trägerkörpers 1 eine gekrümmte Oberfläche auf. Im gezeigten Ausführungsbeispiel weisen weiterhin alle Linsenelemente Oberflächen mit derselben Krümmung und damit dieselbe Brennweite auf. Im gezeigten Ausführungsbeispiel entsprechen die Linsenelemente dabei Teilen von bikonvexen Linsen, wobei in Figur 1C die zugrunde liegenden, gedachten bikonvexen Linsen 11, 12, 13 beispielhaft durch die gestrichelten Linien im Trägerkörper 1 angedeutet sind. Der Trägerkörper 1 und die erste und zweite Linsenstruktur 4, 5 können daher als sich überschneidende Linsen verstanden werden.

Je nach Ausführung der dem optischen Bauelement zugrunde liegenden gedachten Linsen können vor allem auch die Mittelpunkte der der Linsenelemente von einer regelmäßigen Anordnung auf der ersten bzw. zweiten Hauptoberfläche 2, 3 abweichen. Insbesondere eine zufallsverteilte, statistische Verteilung der Mittelpunkte der Linsenelemente kann weiterhin zur oben beschriebenen homogenen Abstrahlcharakteristik und Leuchtdichteverteilung im Fernfeld des optischen Bauelements 100 beitragen.

Alternativ zum gezeigten Ausführungsbeispiel kann die Trägerplatte 1 auch durch sich überschneidende plan-konvexe Linsen 11, 12, 13 gebildet werden. Das bedeutet, dass die Trägerplatte 1 in diesem Fall eine zweite Hauptoberfläche 3 aufweist, die plan ausgeführt ist, so dass auf der zweiten Hauptoberfläche 3 keine zweite Linsenstruktur 5 direkt erkennbar ist. Alternativ dazu können die Linsenelemente der ersten und/oder zweiten Linsenstruktur 4, 5 auch sphärisch oder asphärisch konkav ausgebildet sein.

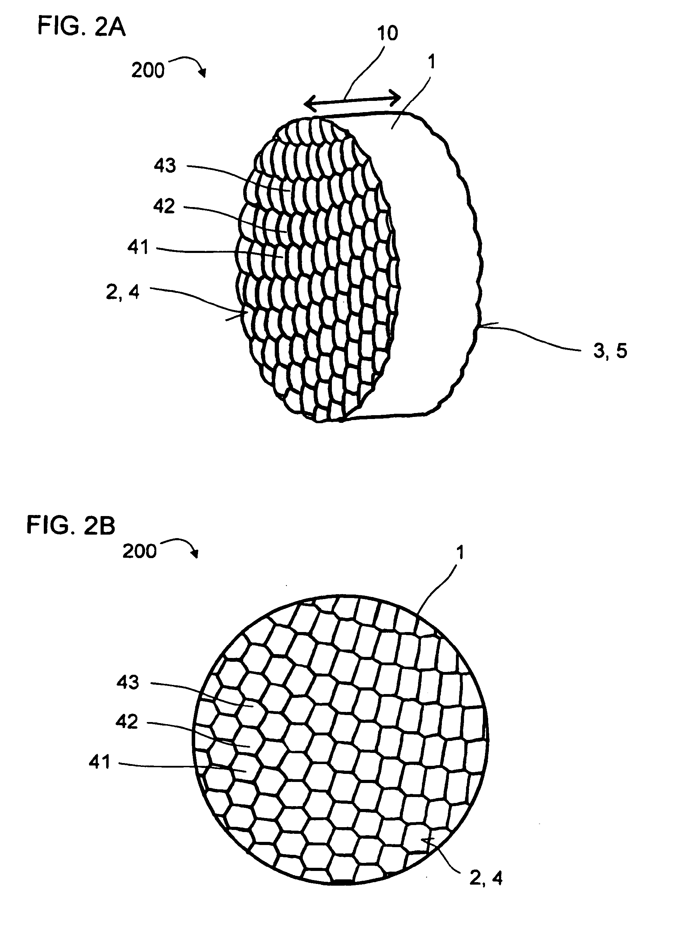

In den Figuren 2A und 2B ist ein weiteres Ausführungsbeispiels für ein optisches Bauelement 200 gezeigt. Die Figuren 2A und 2B zeigen dabei jeweils nur einen Ausschnitt des optischen Bauelements 200, wobei Figur 2A einen dreidimensionalen Ausschnitt des Trägerkörpers 1 zeigt und Figur 2B eine Draufsicht auf einen Ausschnitt der ersten Hauptoberfläche 2 mit der ersten Linsenstruktur 4.

Wie im vorangegangenen Ausführungsbeispiel weist das optische Bauelement 200 einen Trägerkörper 1 mit einer ersten Linsenstruktur 4 auf der ersten Hauptoberfläche 2 und einer dazu spiegelverkehrt ausgeführten zweiten Linsenstruktur 5 auf der zweiten Hauptoberfläche 3 auf. Die erste und zweite Linsenstruktur 4, 5 weisen jeweils eine Vielzahl von Linsenelementen auf, von denen beispielhaft die Linsenelemente 41, 42 und 43 der ersten Linsenstruktur bezeichnet sind. Die Linsenelemente weisen alle eine mehreckige Form in Form von nicht-deckungsgleichen Sechsecken auf, die direkt benachbart zueinander sind und aneinander anschließen. Somit kann die gesamte erste und zweite Hauptoberfläche 2, 3 des optischen Bauelements 200 mit Linsenelementen bedeckt werden, die alle zur optischen Abbildung beitragen.

Die Linsenelemente weisen wie im vorherigen Ausführungsbeispiel eine Wirbelstruktur in der relativen Anordnung der Linsenelemente zueinander auf sowie eine Verkleinerung der jeweiligen Fläche der Linsenelemente proportional zum Abstand zum (nicht gezeigten) Mittelpunkt der ersten Hauptoberfläche 2 der Trägerplatte 1.

Das optische Bauelement 200 kann beispielsweise eine kreisrunde Form mit einem Durchmesser von größer oder gleich 1 cm und kleiner oder gleich mehreren 10 cm aufweisen. Die Dicke 10 der Trägerplatte 1 kann je nach gewünschter Fokussierungs- oder Defokussierungseigenschaften größer oder gleich 100 µm und kleiner oder gleich einigen mm sein. Vorteilhaft für Beleuchtungsvorrichtungen ist beispielsweise ein Trägerkörper mit einem Durchmesser von etwa 10 cm und einer Dicke von etwa 2 mm. Der mittlere Durchmesser eines Linsenelements ist dabei etwa 1 mm bei einer Brennweite der Linsenelemente von etwa 2 mm, so dass die erste bzw. zweite Linsenstruktur 4, 5 jeweils etwa 10000 Linsenelemente aufweisen.

Alternativ dazu kann die Dicke 10 der Trägerplatte 1 beispielsweise auch etwa 500 µm betragen und die Linsenelemente können eine Brennweite von etwa 500 µm aufweisen.

In Figur 3 ist ein Ausführungsbeispiel für eine Beleuchtungsvorrichtung 300 gezeigt. Die Beleuchtungsvorrichtung 300 umfasst eine Lichtquelle 6, die im gezeigten Ausführungsbeispiel vier LEDs 61, 62, 63, 64 auf einem Träger 60 aufweist. Die LED 61 strahlt dabei im Betrieb rotes Licht ab, die LEDs 62 und 63 grünes Licht und die LED 64 blaues Licht. Da die LEDs 61 bis 64 auf dem Träger 60 in Abstrahlrichtung nebeneinander angeordnet sind, weist das vom Träger 6 mit den LEDs 61 bis 64 abgestrahlte Licht eine inhomogene Leuchtdichte- und Farbverteilung auf.

Die Lichtquelle 6 umfasst weiterhin einen Kollimator 7, der den LEDs 61 bis 64 in Abstrahlrichtung nachgeordnet ist und der das von den LEDs 61 bis 64 abgestrahlte Licht in einen begrenzten Raumwinkelbereich kollimiert. Dem Kollimator 7 ist ein optisches Bauelement 200 wie im vorherigen Ausführungsbeispiel gezeigt nachgeordnet, von dem in Figur 3 lediglich ein Ausschnitt gezeigt ist. Insbesondere sind die Lichtquelle 6 mit den LEDs 61 bis 64 und dem Kollimator 7 und das optische Bauelement 200 entlang einer gemeinsamen optischen Achse (nicht gezeigt) angeordnet.

Der Kollimator 7 ist im gezeigten Ausführungsbeispiel als Linse ausgeführt. Diese kann beispielsweise eine Fresnel-Linse sein. Jedoch weist das vom Kollimator 7 abgestrahlte Licht wie das vom Träger 60 mit den LEDs 61 bis 64 direkt abgestrahlte Licht eine inhomogene Leuchtdichte- und Farbverteilung auf.

Wie durch die gestrichelten Linien zwischen dem Träger 60 und dem Kollimator 7 angedeutet, erscheinen die LEDs 61 bis 64 vom Kollimator 7 aus gesehen in der Mitte des Kollimators unter einem maximalen Winkel 83, während sie vom Rand des Kollimators 7 aus gesehen unter einem minimalen Winkel 82 erscheinen. Aufgrund der Etendueerhaltung in klassischen, abbildenden Systemen wird das Licht der LEDs 61 bis 64 am Rand des Kollimators 7 stärker gebündelt als in der Mitte des Kollimators 7. Am Rand des Kollimators wird das Licht mit einem minimalen Öffnungswinkel 84 abgestrahlt, während das Licht in der Mitte des Kollimators 7 mit einem maximalen Winkel 83 abgestrahlt wird. Gerade für Beleuchtungsanwendungen kann eine solche gerichtete Abstrahlung in einen begrenzten Raumwinkelbereich erwünscht sein.

Die Abstrahlcharakteristik der Lichtquelle 6 kann durch einen Abstrahlungskegel mit einem Öffnungswinkel beschrieben werden, der beispielsweise dem Öffnungswinkel entspricht, bei dem die entlang der optischen Achse abgestrahlte Lichtintensität auf die Hälfte abgefallen ist. Der Öffnungswinkel, der somit den begrenzten Raumwinkelbereich definiert, in den die Lichtquelle kollimiertes Licht abstrahlt, kann beispielsweise durch den Abstand zwischen dem Kollimator 7 und den LEDs 61 bis 64 eingestellt werden.

Aufgrund der vorher beschriebenen Abstrahlcharakteristik des Kollimators 7 mit den nach außen hin kleiner werdenden Öffnungswinkeln des vom Kollimator 7 abgestrahlten Lichts folgt für die Linsenelemente der ersten und zweiten Linsenstruktur 4, 5 des optischen Bauelements 200 wie im Zusammenhang mit dem vorherigen Ausführungsbeispiel beschrieben, dass die Flächen der Linsenelemente, die weiter vom Mittelpunkt der Trägerplatte 1 entfernt angeordnet sind, kleiner ausgeführt sind als die Flächen der Linsenelemente, die näher am Mittelpunkt der Trägerplatte 1 angeordnet sind.

Die erste Hauptoberfläche 2 mit der ersten Linsenstruktur 4 bildet dabei eine Strahlungseintrittsfläche des optischen Bauelements 200 für das von der Lichtquelle 6 abgestrahlte Licht, während die zweite Hauptoberfläche 3 mit der zweiten Linsenstruktur 5 eine Strahlungsaustrittsfläche bildet. Wie aus Figur 3 ersichtlich ist, können die Dicke 10 der Trägerplatte 1 und die Brennweite der Linsenelemente der ersten Linsenstruktur 4 derart gewählt werden, dass von der Lichtquelle 6 auf das optische Bauelement 200 fallende Lichtstrahlen von jedem Linsenelement der ersten Linsenstruktur 4 auf das dahinter liegende Linsenelement der zweiten Linsenstruktur 5, also auf die Strahlungsaustrittsfläche, abgebildet werden.

Die Abstrahlwinkel, mit denen das Licht weiterhin von der Strahlungsaustrittsfläche, also den Linsenelementen der zweiten Linsenstruktur 5 abgestrahlt wird, verhalten sich ähnlich wie die Abstrahlwinkel des Kollimators 7, wie beispielhaft durch die Winkel 91 und 92 gezeigt ist. Aufgrund der Abstrahlcharakteristik der Lichtquelle 6 und der Anordnung der Linsenelemente der ersten und zweiten Linsenstruktur 4, 5 wird das Licht von den weiter vom Mittelpunkt der Trägerplatte 1 entfernt liegenden Linsenelementen stärker in Vorwärtsrichtung abgestrahlt, also mit einem geringeren Öffnungswinkel als von Linsenelementen, die näher am Mittelpunkt der Trägerplatte 1 angeordnet sind.

Das hier gezeigte optische Bauelement 300 zeichnet sich weiterhin durch eine sehr gute Durchmischung des von der Lichtquelle 6 abgestrahlten Lichts aus. Die hier gezeigten ersten und zweiten Linsenstrukturen 4, 5 ermöglichen eine hohe räumliche Auflösung der Linsenelemente, die wiederum bewirkt, dass inhomogene Helligkeits- und/oder Farbverteilungen auf der die Strahlungseintrittsfläche bildenden ersten Linsenstruktur 4 durch die Vielzahl der Linsenelemente auf der Strahlungsaustrittsfläche bzw. zweite Linsenstruktur 5 abgebildet und durch die zweite Linsenstruktur 5 im Fernfeld überlagert werden. Die Überlagerung setzt sich dabei aus allen Abbildern der Lichtquelle 6 zusammen, welche durch jedes einzelne Linsenelement auf oder hinter der die Strahlungsaustrittsfläche bildenden zweiten Linsenstruktur 5 erzeugt werden.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Optisches Bauelement, umfassend
- eine Trägerplatte (1) mit einer ersten Hauptoberfläche (2) und einer der erste Hauptoberfläche (2) abgewandten zweiten Hauptoberfläche (3),
- eine erste Linsenstruktur (4) auf der ersten Hauptoberfläche (2) und
- eine zweite Linsenstruktur (5) auf der zweiten Hauptoberfläche (3),
wobei
- die erste Linsenstruktur (4) zumindest ein erstes Linsenelement (41) mit einer ersten mehreckigen Form und ein zweites Linsenelement (42) mit einer zweiten mehreckigen Form aufweist,
- die erste Linsenstruktur (4) die erste Hauptoberfläche (2) vollständig bedeckt,
- das erste Linsenelement (41) und das zweite Linsenelement (42) nicht deckungsgleich zueinander sind und/oder sich in ihrer Orientierung auf der ersten Hauptoberfläche (2) der Trägerplatte (1) unterscheiden und
- die zweite Linsenstruktur (5) **dadurch gekennzeichnet, dass** auf der zweiten Hauptoberfläche (3) spiegelverkehrt zur ersten Linsenstruktur (4) auf der ersten Hauptoberfläche (2) ist.

2. Optisches Bauelement nach Anspruch 1, wobei
- das erste Linsenelement (41) und das zweite Linsenelement (42) gegeneinander verdreht auf der Trägerplatte (1) angeordnet sind.

3. Optisches Bauelement nach einem der vorherigen Ansprüche, wobei
- die erste mehreckige Form und die zweite mehreckige Form unterschiedlich ausgeformt sind.

4. Optisches Bauelement nach einem der vorherigen Ansprüche, wobei
- die Trägerplatte (1) mit der ersten Linsenstruktur (4) einstückig ausgeformt ist.

5. Optisches Bauelement nach einem der vorherigen Ansprüche, wobei
- das erste Linsenelement (41) eine gekrümmte Fläche aufweist, das von einer Begrenzungslinie mit der ersten mehreckigen Form begrenzt ist und
- das zweite Linsenelement (42) eine gekrümmte Fläche aufweist, das von einer Begrenzungslinie mit der zweiten mehreckigen Form begrenzt ist.

6. Optisches Bauelement nach einem der vorherigen Ansprüche, wobei
- das erste Linsenelement (41) und das zweite Linsenelement (42) dieselbe Brennweite aufweisen.

7. Optisches Bauelement nach dem vorherigen Anspruch, wobei
- die Trägerplatte (1) eine Dicke (10) aufweist, die kleiner als die Brennweite des ersten und des zweiten Linsenelements (41, 42) ist.

8. Optisches Bauelement nach einem der vorherigen Ansprüche, wobei
- die Trägerplatte (1) ein Material aus einer Gruppe aufweist, die gebildet wird durch einen Kunststoff, ein Halbleitermaterial und Glas.

9. Optisches Bauelement nach einem der vorherigen Ansprüche, wobei
- die erste mehreckige Form und die zweite mehreckige Form jeweils ein Sechseck sind.

10. Optisches Bauelement nach einem der vorherigen Ansprüche, wobei
- die erste Linsenstruktur (4) eine Vielzahl von Linsenelementen mit jeweils einer mehreckigen Form aufweist.

11. Optisches Bauelement nach dem vorherigen Anspruch, wobei
- die erste Hauptoberfläche (2) einen Mittelpunkt (70) aufweist und
- jedes der Vielzahl von Linsenelementen eine Fläche auf der ersten Hauptoberfläche (2) einnimmt, die mit zunehmendem Abstand vom Mittelpunkt (70) kleiner wird.

12. Optisches Bauelement nach Anspruch 10 oder 11, wobei
- jedes der Vielzahl von Linsenelementen und direkt dazu benachbarte Linsenelemente gegeneinander verdreht sind.

13. Beleuchtungsvorrichtung, umfassend:
- eine Lichtquelle (6), die im Betrieb Licht in einen begrenzten Raumwinkelbereich abstrahlt, und
- ein optisches Bauelement nach einem der Ansprüche 1 bis 12 im Strahlengang der Lichtquelle (6),
wobei
- die Lichtquelle (6) eine Anordnung mit lichtemittierenden Dioden (61, 62, 63, 64) und einen der Anordnung nachgeordneten Kollimator (7) aufweist.

## Claims

1. Optical component, comprising
- a carrier plate (1) having a first main surface (2) and a second main surface (3) facing away from the first main surface (2),
- a first lens structure (4) on the first main surface (2), and
- a second lens structure (5) on the second main surface (3),
wherein
- the first lens structure (4) has at least a first lens element (41) having a first polygonal form and a second lens element (42) having a second polygonal form,
- the first lens structure (4) completely covers the first main surface (2),
- the first lens element (41) and the second lens element (42) are non-congruent with respect to one another and/or differ in terms of their orientation on the first main surface (2) of the carrier plate (1), and **characterized in that**
- the second lens structure (5) on the second main surface (3) is mirror-inverted with respect to the first lens structure (4) on the first main surface (2).

2. Optical component according to Claim 1, wherein
- the first lens element (41) and the second lens element (42) are arranged in a manner rotated relative to one another on the carrier plate (1).

3. Optical component according to either of the preceding claims, wherein
- the first polygonal form and the second polygonal form are shaped differently.

4. Optical component according to any of the preceding claims, wherein
- the carrier plate (1) is shaped integrally with the first lens structure (4).

5. Optical component according to any of the preceding claims, wherein
- the first lens element (41) has a curved area bounded by a boundary line having the first polygonal form, and
- the second lens element (42) has a curved area bounded by a boundary line having the second polygonal form.

6. Optical component according to any of the preceding claims, wherein
- the first lens element (41) and the second lens element (42) have the same focal length.

7. Optical component according to the preceding claim, wherein
- the carrier plate (1) has a thickness (10) that is less than the focal length of the first and of the second lens elements (41, 42).

8. Optical component according to any of the preceding claims, wherein
- the carrier plate (1) comprises a material from a group formed by a plastic, a semiconductor material and glass.

9. Optical component according to any of the preceding claims, wherein
- the first polygonal form and the second polygonal form are in each case a hexagon.

10. Optical component according to any of the preceding claims, wherein
- the first lens structure (4) has a multiplicity of lens elements each having a polygonal form.

11. Optical component according to the preceding claim, wherein
- the first main surface (2) has a midpoint (70), and
- each of the multiplicity of lens elements occupies an area on the first main surface (2) which becomes smaller with increasing distance from the midpoint (70).

12. Optical component according to Claim 10 or 11, wherein
- each of the multiplicity of lens elements and lens elements directly adjacent thereto are rotated relative to one another.

13. Illumination device, comprising:
- a light source (6), which emits light into a delimited solid angle range during operation, and
- an optical component according to any of Claims 1 to 12 in the beam path of the light source (6),
wherein
- the light source (6) has an arrangement comprising light-emitting diodes (61, 62, 63, 64) and a collimator (7) disposed downstream of the arrangement.

## Revendications

1. Composant optique, comprenant
- une plaque de support (1) avec une première surface principale (2) et une deuxième surface principale (3) opposée à la première surface principale (2),
- une première structure de lentille (4) sur la première surface principale (2) et
- une deuxième structure de lentille (5) sur la deuxième surface principale (3),
dans lequel
- la première structure de lentille (4) présente au moins un premier élément de lentille (41) avec une première forme polygonale et un deuxième élément de lentille (42) avec une deuxième forme polygonale,
- la première structure de lentille (41) recouvre entièrement la première surface principale (2),
- le premier élément de lentille (41) et le deuxième élément de lentille (42) ne se recouvrent pas entièrement et/ou diffèrent dans leur orientation sur la première surface principale (2) de la plaque de support (1), et
**caractérisé en ce que**
- la deuxième structure de lentille (5) sur la deuxième surface principale (3) est l'image réfléchie de la première structure de lentille (4) sur la première surface principale (2).

2. Composant optique selon la revendication 1, dans lequel
- le premier élément de lentille (41) et le deuxième élément de lentille (42) sont disposés sur la plaque de support (1) en étant tournés l'un par rapport à l'autre.

3. Composant optique selon l'une quelconque des revendications précédentes, dans lequel
- la première forme polygonale et la deuxième forme polygonale sont de forme différente.

4. Composant optique selon l'une quelconque des revendications précédentes, dans lequel
- la plaque de support (1) est formée d'une seule pièce avec la première structure de lentille (4).

5. Composant optique selon l'une quelconque des revendications précédentes, dans lequel
- le premier élément de lentille (41) présente une face courbe, qui est limitée par une ligne de limitation avec la première forme polygonale, et
- le deuxième élément de lentille (42) présente une face courbe, qui est limitée par une ligne de limitation avec la deuxième forme polygonale.

6. Composant optique selon l'une quelconque des revendications précédentes, dans lequel
- le premier élément de lentille (41) et le deuxième élément de lentille (42) présentent la même distance focale.

7. Composant optique selon l'une quelconque des revendications précédentes, dans lequel
- la plaque de support (1) présente une épaisseur (10), qui est inférieure à la distance focale du premier et du deuxième éléments de lentille (41, 42).

8. Composant optique selon l'une quelconque des revendications précédentes, dans lequel
- la plaque de support (1) présente un matériau choisi dans un groupe qui est formé par une matière plastique, un matériau semi-conducteur et le verre.

9. Composant optique selon l'une quelconque des revendications précédentes, dans lequel
- la première forme polygonale et la deuxième forme polygonale sont respectivement un hexagone.

10. Composant optique selon l'une quelconque des revendications précédentes, dans lequel
- la première structure de lentille (4) présente une pluralité d'éléments de lentille ayant chacun une forme polygonale.

11. Composant optique selon la revendication précédente, dans lequel
- la première surface principale (2) présente un point central (70) et
- chacun de la pluralité d'éléments de lentille occupe, sur la première surface principale (2), une surface qui diminue lorsque la distance du point central (70) augmente.

12. Composant optique selon la revendication 10 ou 11, dans lequel
- chacun de la pluralité d'éléments de lentille et des éléments de lentille directement adjacents à celui-ci sont tournés l'un par rapport à l'autre.

13. Dispositif d'éclairage, comprenant:
- une source de lumière (6), qui en fonctionnement rayonne de la lumière dans un domaine angulaire spatial limité, et
- un composant optique selon l'une quelconque des revendications 1 à 12 dans le trajet des rayons de la source de lumière (6),
dans lequel
- la source de lumière (6) présente un agencement avec des diodes électroluminescentes (61, 62, 63, 64) et un collimateur (7) placé en aval de l'agencement.
